# EUROPEAN PATENT APPLICATION

(11) **EP 3 992 155 A1**
(43) Date of publication of application: **04.05.2022**
(21) Application number: 20832242.0
(22) Date of filing: 23.06.2020
(51) Int. Cl.: C02F 1/42

(54) **WATER TREATMENT SYSTEM WITH SHUT-OFF VALVE CONNECTED TO REMOTE OPERATION**

(30) Priority: 26.06.2019 US 201916452641
(71) Applicant: Haier Smart Home Co., Ltd., Qingdao, Shandong 266101 (CN); Haier US Appliance Solutions, Inc., Wilmington, DE 19801 (US)
(72) Inventor: CARR, Gregory Scott, Wilmington, Delaware 19801 (US)
(74) Representative: Lavoix
(86) International application number: PCT/CN2020/097674
(87) International publication number: WO 2020/259485

(57) **Abstract**

A point of entry water treatment system (10), comprising a valve (28), a network communications module (36), and a water flow meter (26) configured to detect a flow event into the plumbing system and to measure a duration and a flow rate of the flow event. The system (10) also comprises a tank (12) with an ion-exchange resin (14) therein. The system (10) is configured for receiving a signal (410) from the water flow meter (26) indicative of a measured flow event. The system may also be configured to close the valve (82) either automatically in response to the signal (410) from the water flow meter (26) or in response to a command (1000) received from a remote user interface device (300).

## Description

### FIELD OF THE INVENTION

The present invention relates generally to water treatment systems, such as water softener systems and point of entry water treatment systems. In particular, the present invention relates to point of entry water treatment systems having features for monitoring water flow events and communicating with remote devices.

### BACKGROUND OF THE INVENTION

Water treatment systems are generally divided into two classes: point of entry systems and point of use systems. Point of entry water treatment systems can be installed on a water line in order to treat water flowing through the water line into a residence or other building. Thus, point of entry water treatment systems can provide treated water throughout the building, e.g., residence.

When installed, the point of entry water treatment systems are generally upstream of the plumbing system in the building. In some instances, water flow into the plumbing system in the building may be excessive or unintended. For example, a faucet may inadvertently be left open or a leak may develop within the plumbing system. Over time, such water flows can lead to increased water bills and may even cause damage to surrounding portions of the building, e.g., moisture-sensitive building materials may be damaged by water from a leaky pipe.

Accordingly, a point of entry water treatment system that is also capable of detecting potentially problematic water flows, e.g., possible leaks, and of providing an early warning of such flows would be useful.

### BRIEF DESCRIPTION OF THE INVENTION

Aspects and advantages of the present disclosure will be set forth in part in the following description, or may be apparent from the description, or may be learned through practice of the invention.

In one exemplary embodiment, a point of entry water treatment system is provided. The point of entry water treatment system is connected between a water supply and a plumbing system. The point of entry water treatment system includes a valve downstream of the water supply and upstream of the plumbing system. The point of entry water treatment system also includes a network communications module. The point of entry water treatment system further includes a water flow meter configured to detect a flow event into the plumbing system. The water flow meter is also configured to measure a duration and a flow rate of the flow event. The point of entry water treatment system also includes a tank with an ion-exchange resin in an internal volume of the tank and a salt reservoir. The point of entry water treatment system further includes a controller. The controller is in communication with the network communications module and the water flow meter and in operative communication with the valve. The controller is configured for receiving a signal from the water flow meter indicative of a measured flow event and closing the valve either automatically in response to the signal from the water flow meter or in response to a signal received from a remote user interface device via the network communications module.

In another exemplary embodiment, a method of operating a point of entry water treatment system connected between a water supply and a plumbing system is provided. The water treatment system includes a valve downstream of the water supply and upstream of the plumbing system, a tank with an ion-exchange resin in an internal volume of the tank, and a salt reservoir. The method includes receiving a signal from a water flow meter in the point of entry water treatment system. The signal is indicative of a measured flow event through the point of entry water treatment system into the plumbing system. The signal corresponds to a duration and a flow rate of the measured flow event measured by the water flow meter. The method also includes closing the valve either automatically in response to the signal from the water flow meter or in response to a signal received from a remote user interface device via the network communications module.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 provides a perspective view of a water treatment system according to one or more exemplary embodiments of the present invention.
FIG. 2 provides a front view of the exemplary water treatment system of FIG. 1.
FIG. 3 provides a flow chart diagram of an exemplary method of operating a point of entry water treatment system according to one or more additional exemplary embodiments of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, terms of approximation, such as "generally," "substantially," or "about" include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

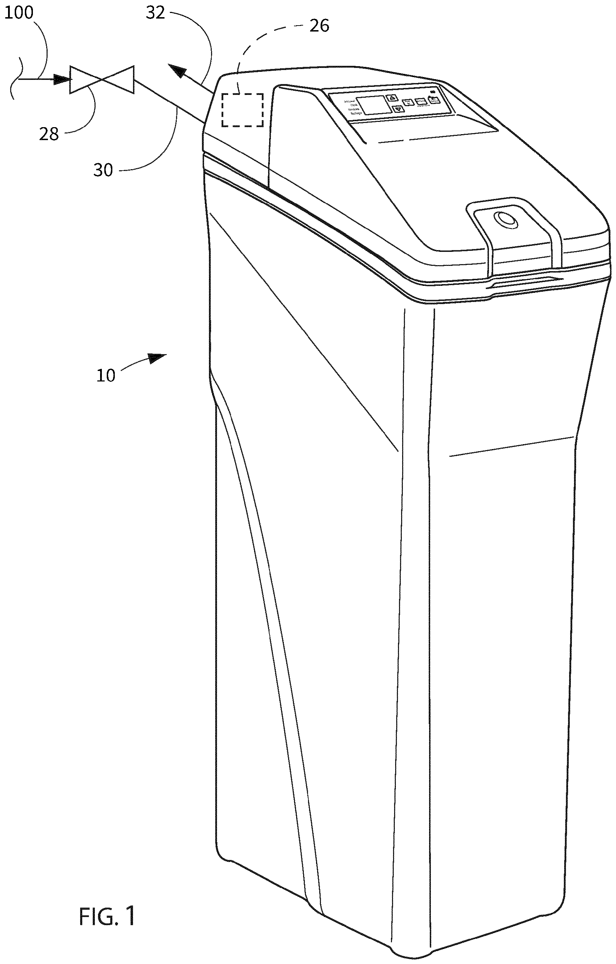

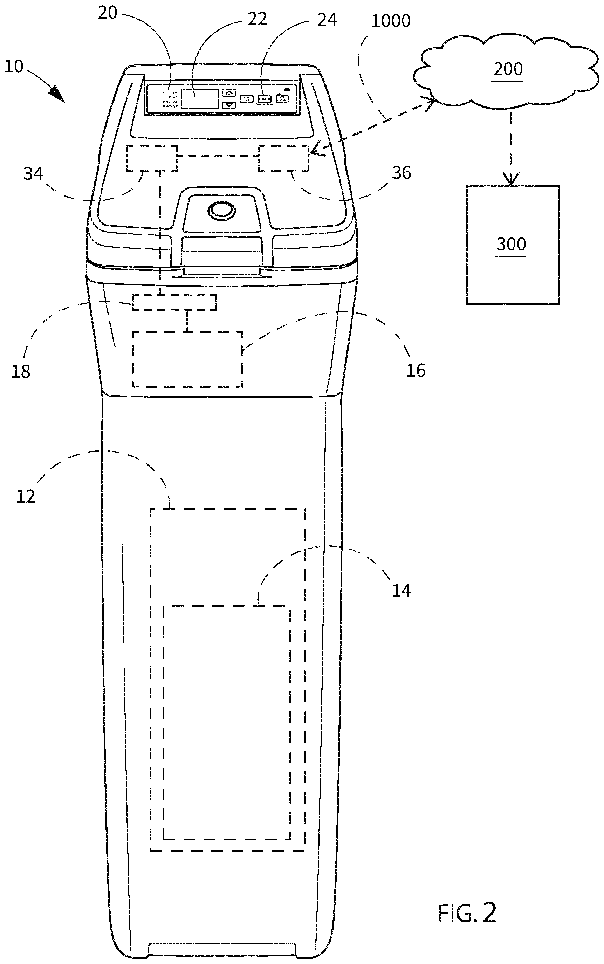

FIG. 1 provides a perspective view of a water treatment system 10 according to one or more exemplary embodiments of the present invention. FIG. 2 provides a front view of water treatment system 10. Water treatment system 10 can treat water from a water supply (not shown), such as a municipal water source or a well. For example, the water treatment system 10 may be a water softener which, as is generally understood by those of ordinary skill in the art, can remove or reduce hardness, e.g., mineral content, from the water. As will be understood by those of ordinary skill in the art and as used herein, the term "water" includes purified water and solutions or mixtures containing water and, e.g., elements (such as calcium, chlorine, and fluorine), salts, bacteria, nitrates, organics, and other chemical compounds or substances. Further, those of ordinary skill in the art will recognize that the water softener system 10 may remove selected solutes from the water, such as minerals, e.g., calcium or magnesium, and other constituents.

As illustrated in FIG. 1, the water treatment system 10 may be a point of entry system. For example, the water treatment system 10 may be connected between a water supply, e.g., a municipal water system or a well as mentioned above, and a plumbing system. For example, the water treatment system 10 may be connected upstream of an entire plumbing system of a building and/or substantially all of the plumbing system of a building. The building may be any enclosure or structure in which occupants use or consume water and/or in which water-using devices such as household appliances or industrial equipment are located, where the occupants and/or devices access the water via a plumbing system. Thus, the building may be, for example, a residential building such as a house, a commercial building such as an office or factory, or a mixed-use facility, among other possible examples. The structure and function of buildings and associated plumbing systems therein are generally understood by those of ordinary skill in the art and, as such, are not shown or described in further detail herein for the sake of brevity and clarity.

As schematically illustrated in FIG. 1, the point of entry water treatment system 10 may be connected to the water supply via a water line 100 and the point of entry water treatment system 10 may include a valve 28, an inlet 30 and an outlet 32. The inlet 30 may receive water from the water supply via water line 100 and the water may flow into the water treatment system 10 via the inlet 30. After flowing through and being treated by the water treatment system 10, as will be described in more detail below, the treated, e.g., softened, water may exit the water treatment system 10 at the outlet 32 of the water treatment system. Thus, the water treatment system 10 may provide treated, e.g., softened, water to the building's plumbing system via the outlet 32. The point of entry water treatment system may also include a water flow meter 26 between the inlet 30 and the outlet 32, e.g., downstream of the inlet 30 and upstream of the outlet 32. Thus, the water flow meter 26 may measure and/or detect all or substantially all of the water drawn into the plumbing system from the water supply.

The point of entry water treatment system 10, and in particular the valve 28 thereof, may be connected between the water supply and the plumbing system, e.g., may be downstream of the water supply and upstream of the plumbing system. Accordingly, the point of entry water treatment system 10 may provide the ability to cut off all or substantially all flow of water into the building plumbing system by closing the valve 28. In some embodiments, the valve 28 may be an external component of the water treatment system 10, e.g., as illustrated in FIG. 1, where the valve 28 is connected upstream of the inlet 30. In other embodiments, the valve 28 may be an internal component of the water treatment system 10.

FIG. 2 is a front view of the point of entry water treatment system 10 of FIG. 1. As may be seen in FIG. 2, the point of entry water treatment system 10 includes a control panel 20 including a plurality of input selectors 24 and a display 22.

Control panel 20 and input selectors 24 collectively form a user interface input for operator selection of cycles and features, and display 22 indicates selected features, a countdown timer, and/or other items of interest to users. It should be appreciated, however, that in other exemplary embodiments, the control panel 20, input selectors 24, and display 22, may have any other suitable configuration. For example, in other exemplary embodiments, one or more of the input selectors 24 may be configured as manual "push-button" input selectors, or alternatively may be configured as a touchscreen on, e.g., display 22.

In at least some embodiments, the point of entry water treatment system 10 may be a point of entry water softener 10, as mentioned above. As schematically illustrated in FIG. 2, the point of entry water softener 10 may include a tank 12 with an ion-exchange resin 14 stored therein, e.g., within an internal volume of the tank 12. The point of entry water softener 10 may also include a salt reservoir 16. As is generally understood by those of ordinary skill in the art, the water softener 10 directs the water to be treated (softened) to and through the tank 12, wherein the ion-exchange resin 14 absorbs minerals, e.g., calcium and magnesium, from the water, before flowing the softened water to the plumbing system. When the resin 14 becomes saturated with the target minerals, the tank 12 may be flushed with a saline solution to recharge the resin 14 and restore the capacity of the resin 14 to absorb further minerals from the incoming water. For example, incoming water may be diverted to and through the salt reservoir 16 before being directed to the tank 12. Thus, the water may mix with salt in the reservoir 16 to form the saline solution. It should be understood that "salt" as used herein may refer to table salt, e.g., sodium chloride, and/or other suitable salts, such as potassium chloride. For example, the water flow meter 26 may be used to measure or estimate a remaining life of the ion-exchange resin 14 based on a cumulative measurement of water drawn through the water treatment system 10. In such embodiments, the water may be diverted to the salt reservoir 16 as described after a predetermined total amount of water has been drawn through the water treatment system 10, and the cumulative water flow measurement may then be reset after recharging the ion-selective resin with the saline solution.

Various sensors and other measuring devices may additionally be included in the point of entry water treatment system 10. For example, in addition to the water flow meter 26 described above, the point of entry water treatment system 10 may include a level sensor 18 in or connected to the salt reservoir 16 and configured to detect a level of salt in the reservoir 16.

Operation of the point of entry water treatment system 10 is controlled by a processing device or controller 34 that is operatively coupled to the input selectors 24 located on control panel 20 for user manipulation to select water treatment system 10 operations and features. Controller 34 may further be operatively coupled to various other components of point of entry water treatment system 10, such as the flow meter 26 (FIG. 1), valve 28, level sensor 18, other suitable sensors, etc. In response to user manipulation of the input selectors 24, controller 34 may operate the various components of the point of entry water treatment system 10 to execute selected system operations and features.

Controller 34 is a "processing device" or "controller" and may be embodied as described herein. As used herein, "processing device" or "controller" may refer to one or more microprocessors, microcontrollers, application-specific integrated circuits (ASICS), or semiconductor devices and is not restricted necessarily to a single element. The controller 34 may be programmed to operate the point of entry water treatment system 10 by executing instructions stored in memory. The controller may include, or be associated with, one or more memory elements such as for example, RAM, ROM, or electrically erasable, programmable read only memory (EEPROM). For example, the instructions may be software or any set of instructions that when executed by the processing device, cause the processing device to perform operations. Controller 34 can include one or more processor(s) and associated memory device(s) configured to perform a variety of computer-implemented functions and/or instructions (e.g. performing the methods, steps, calculations and the like and storing relevant data as disclosed herein). It should be noted that controllers 34 as disclosed herein are capable of and may be operable to perform any methods and associated method steps as disclosed herein.

Fig. 2 schematically illustrates the point of entry water treatment system 10 communicating with a remote user interface device 300 via a network communications module 36. As shown in Fig. 2, the point of entry water treatment system 10, and in particular, controller 34 thereof, may be configured to communicate with a separate device external to the appliance, such as a communications device or other remote user interface device 300. The remote user interface device 300 may be a laptop computer, smartphone, tablet, personal computer, wearable device, smart home system, and/or various other suitable devices. The point of entry water treatment system 10 may include a network communication module, e.g., a wireless communication module, 36 for communicating with the remote user interface device 300. In various embodiments, network communication module 36 includes a network interface such that the controller 34 of the point of entry water treatment system 10 can connect to and communicate over one or more networks with one or more network nodes. Network communication module 36 can also include one or more transmitting, receiving, or transceiving components for transmitting/receiving communications with other devices communicatively coupled with point of entry water treatment system 10. The network communication module 36 may be in communication with, e.g., coupled or connected to, the controller 34 to transmit signals to and receive signals from the controller 34.

As schematically illustrated in FIG. 2, the network communication module 36 may be configured to communicate with the remote user interface device 300 through a network 200. The network 200 may be or include various possible communication connections and interfaces, e.g., such as Zigbee, BLUETOOTH^{®}, WI-FI^{®}, or any other suitable communication connection. The remote user interface device 300 may include a memory for storing and retrieving programming instructions. For example, the remote user interface device 300 may be a smartphone operable to store and run applications, also known as "apps," and may include a remote user interface provided as a smartphone app.

The point of entry water treatment system 10 and the remote user interface device 300 may be matched in wireless communication, e.g., may be wirelessly connected via the network communication module 36 in embodiments where the network communication module 36 is a wireless communication module 36. The point of entry water treatment system 10 may receive a signal 1000, e.g., a wireless signal, from the remote user interface device 300. The signal 1000 sent from the remote user interface device 300 may include data encoded therein, including a command for the point of entry water treatment system 10. As shown in Fig. 2, the signal 1000 may be transmitted and received in both directions, e.g., to and from each of the remote user interface device 300 and the point of entry water treatment system 10.

As mentioned, the water flow meter 26 may measure and/or detect all or substantially all of the water drawn into the plumbing system from the water supply, particularly where the water treatment system 10 is a point of entry system such that water enters the plumbing system from the water supply via the point of entry water treatment system 10. For example, the water flow meter 26 may be configured to detect and measure a flow event into the plumbing system, and may further be configured to measure a duration and a flow rate of the flow event. The controller 34 may be in communication with the water flow meter 26, e.g., the controller 34 may be connected to the water flow meter 26, such as by one or more communication lines, e.g., signal lines, shared communication busses, or may be wirelessly connected. For example, such communication may include the controller 34 receiving various signals from the water flow meter 26 indicative of a measured flow event. For example, such signals from the water flow meter may be or include data representative of or proportional to the measured duration and flow rate of the flow event. The controller 34 may compare the duration of the flow event to a first threshold, e.g., a time or duration threshold and may compare the flow rate of the flow event to a second threshold, e.g., a flow rate threshold. For example, the first threshold and the second threshold may be stored in a memory of the controller 34. In at least some embodiments, the first threshold and the second threshold may be received by the controller 34 from the remote user interface device 300, such as via the network communication module 36, and then stored in the memory of the controller 34. In some embodiments, at least one of the first threshold and the second threshold may be user selectable. For example, first threshold may be defined in response to a user input received by the remote user interface device 300 and transmitted to the controller. In additional embodiments, at least one of the first threshold and the second threshold may be predefined. For example, the second threshold may be entered into the memory of the controller 34 at the time of manufacture.

When the duration of the measured flow event is greater than the first threshold and the flow rate of the measured flow event is greater than the second threshold, the controller 34 may close the valve 28. In some embodiments, the controller 34 may automatically close the valve 28 in response to the received signal from the water flow meter 26. In such embodiments, "automatically" includes closing the valve 28 immediately after receiving the signal from the water flow meter 26, e.g., without waiting for any user input. In other embodiments, the controller 34 may close the valve 28 in response to a signal from the remote user interface device 300. For example, the controller 34 may send a signal to the remote user interface device 300 via the network communications module 36 in response to the signal received from the water flow meter 26. For example, the signal to the remote user interface device 300 may include a user notification corresponding to the measured flow event. The user may then decide to close the valve 28, e.g., in response to the user notification.

In various embodiments, providing the notification to the user may include providing a graphic or written notification and/or an audible notification. Such notifications, whether written, audible, or both, may be delivered via the water treatment system 10, e.g., the user interface thereof such as the display 22, and/or via the remote user interface on the remote user interface device 300. Various combinations, up to and including both a written and an audible notification on both the water treatment system 10 user interface and the remote user interface device 300 are possible. In various exemplary embodiments, the notification may be a written notification, e.g., one or more text messages. Such written notifications may include, e.g., a text message delivered via email or SMS to a cellphone, tablet computer, smartphone, smart watch, desktop computer, or any other suitable communication device. The text message(s) may also be delivered via the internet, a home network, e.g., intranet, or any other suitable network. Further, such written notifications may be delivered via a dedicated computer program such as a smartphone application or "app." Additionally, written notifications may also include displaying the text message(s) on the display 22 of the water treatment system 10, as well as or instead of on the remote user interface device 300. It is understood that any combination of such messages may be provided, e.g., some or all of an email, an SMS message, and the display 22 on the remote user interface device 300 in various combinations may be provided.

In particular embodiments, the measured flow event may be a possible adverse event, such as a possible leak or malfunction, e.g., a continuously running toilet or a broken pipe. Thus, the user notification may include a flow alert, such as a continuous flow alert. For example, the flow alert may be one or more of a low flow alert, a medium flow alert, or a high flow alert. The selection of which alert(s) to provide may be based on one or both of the first threshold and the second threshold. For example, the first threshold may range from about one minute to about ninety minutes, e.g., in some embodiments, the first threshold may be between about five minutes and about sixty minutes, such as between about ten minutes and about forty-five minutes. Also by way of example, the second threshold may range from about one-tenth of a gallon per minute (0.1 gpm) to about ten gallons per minute (10 gpm), e.g., in some embodiments, the second threshold may be between about three-tenths of a gallon per minute (0.3 gpm) and about five gallons per minute (5 gpm), such as between about 1 gallon per minute (1 gpm) and three gallons per minute (3 gpm).

Generally, the first threshold and the second threshold will vary inversely to one another, e.g., a high flow rate for a short duration may trigger a flow alert, while a low flow rate may only trigger a flow alert after a longer duration. For example, in some embodiments, the first threshold may be about sixty minutes, the second threshold may be about three-tenths of a gallon per minute (0.3 gpm), and the user notification may comprise a low flow alert. As another example, some embodiments may also or instead include a first threshold of about thirty minutes, a second threshold of about two gallons per minute (2 gpm), and the user notification corresponding to the foregoing threshold values may include a medium flow alert. As a further example, additional embodiments may also or instead include a first threshold of about five minutes, a second threshold of about five gallons per minute (5 gpm), and the user notification may include a high flow alert. For example, in some embodiments, multiple first and second thresholds may be included, such as a first low flow threshold and a second low flow threshold, a first medium flow threshold and a second medium flow threshold, and/or a first high flow threshold and a second high flow threshold. In such embodiments, the controller 34 may be configured to provide one or more user notifications when a measured flow event surpasses any one or more of the pairs of thresholds. For instance, the controller 34 may provide a medium flow continuous flow notification when the duration of the measured flow event exceeds the first medium flow threshold and the flow rate of the measured flow event exceeds the second medium flow threshold and/or a high flow continuous flow notification when the duration of the measured flow event exceeds the first high flow threshold and the flow rate of the measured flow event exceeds the second high flow threshold. In other embodiments, the controller 34 may be configured to only provide whichever notification corresponds to the pair of thresholds that is reached first, e.g., only a high flow notification when the first high flow threshold and the second high flow threshold are exceeded and the first high flow threshold corresponds to a shorter time duration than the first medium flow threshold or the first low flow threshold.

As mentioned above, in some embodiments, the controller 34 of the water treatment system 10 may be in operative communication with the valve 28, e.g., the controller 34 may be operatively connected to the valve 28 whereby the controller 34 can actuate the valve 28 between an open position which permits fluid flow and a closed position which prevents or obstructs fluid flow. For example, the controller 34 may be connected to the valve 28 and/or an actuator thereof and may be configured to actuate the valve 28, such as to close the valve 28 and thereby shut off all or substantially all water flow into the building plumbing system from the water supply. The controller 34 may be operable to close the valve 28 in response to a signal from the input selectors 24, e.g., in response to a user input received via the input selectors 24 and/or in response to a signal from the remote user interface device 300, such as a signal received from the remote user interface device 300 via the network 200 and the network communication module 36, or automatically in response to a detected possible adverse flow event. In some instances, a user may desire to shut off the water flow using the valve 28 of the water treatment system 10 due to an extended absence from the building, such as a vacation when the building is a residence. In other instances, the user may desire to shut off the water flow to the plumbing system in order to inspect and/or repair a known or suspected leak or other adverse or unintended flow event. In particular, the water treatment system 10 may identify a suspected unintended flow event based on the measured duration and flow rate of the measured flow event measured by the flow meter 26, as described above. The water treatment system 10 may then notify the user of the flow event, such as by one or more of the low, medium, and/or high flow alerts discussed above, or alternatively may automatically close the valve 28, whereupon the water treatment system 10 may also then notify the user of the flow event and that the valve 28 has been closed. As mentioned, the user notification may be provided by the point of entry water treatment 10 system on the display 22 thereof, and/or via the remote user interface device 300. Accordingly, where the water treatment system 10 is a point of entry water treatment system, the system 10 may thereby provide the ability to detect unintended flow events with the flow meter 26 and to curtail or mitigate the unintended flow event by closing the valve 28. For example, the system 10 may provide the ability to notify or alert a user of the unintended flow event via the remote user interface device 300, including when the user is not present in the building, e.g., when the user is not at home, and to close the valve 28 in response to a command or input from the user entered at the remote user interface device 300, which also may be provided when the user is not physically present in the building.

As mentioned above, the water treatment, e.g., softener, system 10 may include a salt level sensor 18 configured to detect a level of salt in the reservoir 16. In such embodiments, the controller 34 may be in communication with, e.g., connected to, the level sensor 18 and may be configured for receiving a signal from the level senor 18 indicative of a detected level of salt in the reservoir 16. When the signal from the level senor 18 indicates the detected level of salt in the reservoir 16 is less than a salt refill threshold, the controller 34 may provide a low salt user notification. For example, providing the low salt notification may include sending a signal comprising a low salt notification to the remote user interface device 300 via the network communications module 36 in response to the signal received from the level sensor 18 that is less than the salt refill threshold.

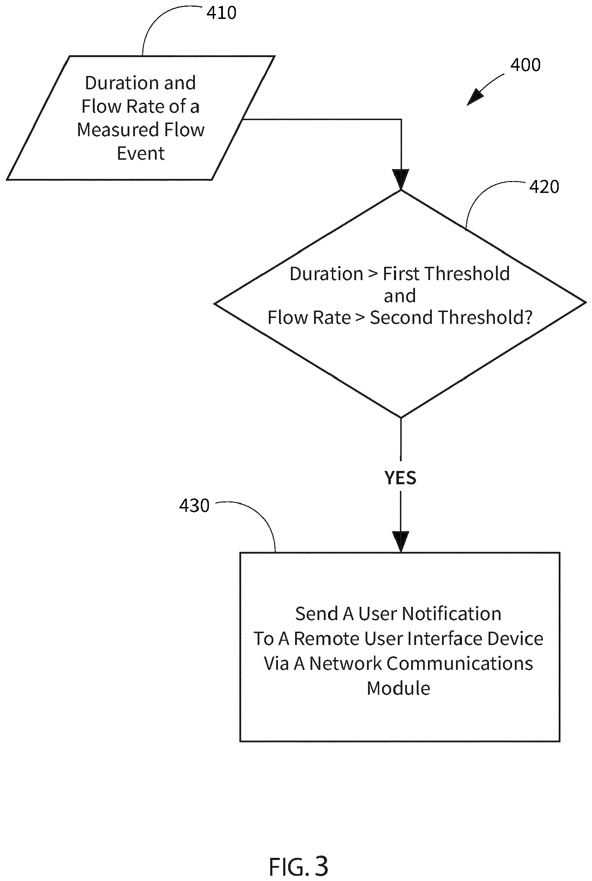

Turning now to FIG. 3, embodiments of the present disclosure also include methods of operating a point of entry water treatment system, such as the exemplary method 400 illustrated in FIG. 3. The water treatment system may be connected between a water supply and a plumbing system. In some embodiments, the water treatment system may include a valve downstream of the water supply and upstream of the plumbing system, a tank with an ion-exchange resin in an internal volume of the tank, and a salt reservoir. For example, in at least some embodiments, the point of entry water treatment system operated in the method 400 may be the point of entry water softener 10 described hereinabove. As illustrated in FIG. 3, the method 400 may include receiving a signal 410, e.g., from the water flow meter 26 of the point of entry water softener 10, where the signal 410 includes and/or indicates a measured flow event through the point of entry water treatment system into the plumbing system and the signal 410 corresponds to a duration and a flow rate of the measured flow event measured by the water flow meter. The method 400 may also include a decision step 420. The decision step 420 may include determining whether the duration of the measured flow event indicated by the signal 410 is greater than a first threshold and determining whether the flow rate of the measured flow event indicated by the signal 410 is greater than a second threshold. When the determination at step 420 is positive, e.g., when the duration of the measured flow event is greater than the first threshold and the flow rate of the measured flow event is greater than the second threshold, the method 400 may proceed to a sending step 430. The sending step 430 may include sending a signal from the point of entry water treatment system to a remote user interface device via a network communications module of the point of entry water treatment system in response to the signal received from the water flow meter. The signal sent in the sending step 430 may comprise a user notification corresponding to the measured flow event. For example, the user notification may include a flow alert, such as one or more of the low flow alert, medium flow alert, or high flow alert, as described above. In at least some embodiments, the method 400 may further include a step of closing the valve in response to a signal received from the remote user interface device via the network communications module, for example, the user may receive the flow alert on the remote user interface device and, in response, e.g. after reviewing the flow alert and determining that the indicated flow is not intended or expected, the user may input a command to close the valve via the remote user interface device and thereby mitigate the unintended flow event.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A point of entry water treatment system connected between a water supply and a plumbing system, the water treatment system comprising:
a valve downstream of the water supply and upstream of the plumbing system;
a network communications module;
a water flow meter configured to detect a flow event into the plumbing system and configured to measure a duration and a flow rate of the flow event;
a tank with an ion-exchange resin in an internal volume of the tank;
a salt reservoir;
a controller in communication with the network communications module and the water flow meter and in operative communication with the valve, the controller configured for:
receiving a signal from the water flow meter indicative of a measured flow event; and
closing the valve in response to one of the signal from the water flow meter or a signal received from a remote user interface device via the network communications module.

2. The system of claim 1, wherein the controller is further configured for sending a signal to the remote user interface device via the network communications module in response to the signal received from the water flow meter, wherein the signal to the remote user interface device comprises a user notification corresponding to the measured flow event, and wherein the controller is configured for closing the valve in response to the signal received from the remote user interface device via the network communications module.

3. The system of claim 1, wherein the measured flow event comprises a measured flow event having a duration greater than a first threshold and a flow rate greater than a second threshold, and the user notification comprises a flow alert.

4. The system of claim 3, wherein the first threshold is between five minutes and sixty minutes, and the second threshold is between three-tenths of a gallon per minute and five gallons per minute.

5. The system of claim 4, wherein the first threshold is sixty minutes, the second threshold is three-tenths of a gallon per minute, and the user notification comprises a low flow alert.

6. The system of claim 4, wherein the first threshold is thirty minutes, the second threshold is two gallons per minute, and the user notification comprises a medium flow alert.

7. The system of claim 4, wherein the first threshold is five minutes, the second threshold is five gallons per minute, and the user notification comprises a high flow alert.

8. The system of claim 3, wherein the controller is further configured for receiving the first threshold and the second threshold from the remote user interface device via the network communications module and storing the received first threshold and second threshold in a memory of the controller.

9. The system of claim 1, further comprising a level sensor configured to detect a level of salt in the reservoir, wherein the controller is in communication with the level sensor and is further configured for receiving a signal from the level senor indicative of a detected level of salt in the reservoir and sending a signal comprising a low salt notification to the remote user interface device via the network communications module in response to the signal received from the level sensor when the signal from the level senor indicates the detected level of salt in the reservoir is less than a salt refill threshold.

10. The system of claim 1, wherein the network communications module is a wireless communications module.

11. A method of operating a point of entry water treatment system connected between a water supply and a plumbing system, the water treatment system comprising a valve downstream of the water supply and upstream of the plumbing system, a tank with an ion-exchange resin in an internal volume of the tank, and a salt reservoir, the method comprising:
receiving a signal from a water flow meter in the point of entry water treatment system, the signal indicative of a measured flow event through the point of entry water treatment system into the plumbing system, the signal corresponding to a duration and a flow rate of the measured flow event measured by the water flow meter; and
closing the valve in response to one of the signal from the water flow meter or a signal received from a remote user interface device via a network communications module.

12. The method of claim 11, further comprising sending a signal from the point of entry water treatment system to the remote user interface device via the network communications module of the point of entry water treatment system in response to the signal received from the water flow meter, wherein the signal to the remote user interface device comprises a user notification corresponding to the measured flow event, and wherein the step of closing the valve comprises closing the valve in response to the signal received from the remote user interface device via the network communications module.

13. The method of claim 11, wherein the duration of the measured flow event is greater than a first threshold and the flow rate of the measured flow event is greater than a second threshold, and the user notification comprises a flow alert.

14. The method of claim 13, wherein the first threshold is between five minutes and sixty minutes, and the second threshold is between three-tenths of a gallon per minute and five gallons per minute.

15. The method of claim 14, wherein the first threshold is sixty minutes, the second threshold is three-tenths of a gallon per minute, and the user notification comprises a low flow alert.

16. The method of claim 14, wherein the first threshold is thirty minutes, the second threshold is two gallons per minute, and the user notification comprises a medium flow alert.

17. The method of claim 14, wherein the first threshold is five minutes, the second threshold is five gallons per minute, and the user notification comprises a high flow alert.

18. The method of claim 13, further comprising receiving the first threshold and the second threshold from the remote user interface device with the point of entry water treatment system via the network communications module and storing the received first threshold and second threshold in a memory of the point of entry water treatment system.

19. The method of claim 11, further comprising receiving a signal indicative of a detected level of salt in the reservoir from a level senor and sending a signal comprising a low salt notification to the remote user interface device via the network communications module in response to the signal received from the level sensor when the signal from the level senor indicates the detected level of salt in the reservoir is less than a salt refill threshold.

20. The method of claim 11, wherein sending the signal from the point of entry water treatment system to the remote user interface device via the network communications module comprises sending the signal wirelessly via a wireless communications module.
